# EUROPEAN PATENT APPLICATION

(11) **EP 3 296 719 A1**
(43) Date of publication of application: **21.03.2018**
(21) Application number: 16792579.1
(22) Date of filing: 28.04.2016
(51) Int. Cl.: G01N 21/27

(54) **GAS CONCENTRATION MEASUREMENT DEVICE**

(30) Priority: 08.05.2015 JP 2015095335
(71) Applicant: Konica Minolta, Inc., Tokyo 100-7015 (JP)
(72) Inventor: IMADE, Kyuichiro, Tokyo 100-7015 (JP); KAGEYAMA, Masashi, Tokyo 100-7015 (JP); ISHIKAWA, Ryouta, Tokyo 100-7015 (JP); NAGASAWA, Hikaru, Tokyo 100-7015 (JP)
(74) Representative: Hoffmann Eitle
(86) International application number: PCT/JP2016/063329
(87) International publication number: WO 2016/181854

(57) **Abstract**

An object of the present invention is to provide a gas concentration measuring device that can accurately superimpose and display a gas concentration image and a background image so that a gas concentration distribution on the background image can be grasped at a glance. The gas concentration measuring device 1 of the present invention includes an imaging camera 20 that captures an image of a background 100, a light source 12 that emits constant light to the background, a light receiver 14 that receives light of the light source 12, a gyro sensor 30 for detecting an irradiation spot of the light of the light source 12, and a control device 40 that generates a background image based on an image capturing result of the imaging camera 20, creates a gas concentration distribution based on a light receiving result of the light receiver 14 and a detection result of the gyro sensor 30, and superimposes the gas concentration distribution on the background image.

## Description

### Technical Field

The present invention relates to a gas concentration measuring device.

### Background Art

It is generally known that a gas such as methane has absorption characteristics with respect to a specific wavelength in an infrared region, and there are many devices that measure a gas concentration by detecting an output variation of a light receiving signal with respect to an irradiation wavelength of infrared ray (e.g., refer to Patent Literature 1).

In particular, a device of Patent Literature 1 divides a background into lattice-like areas in a horizontal direction and a vertical direction and synchronizes irradiation and reception of laser infrared light for each divided area, and thereby the device tries to perform gas detection more accurately than when irradiating an entire object to be measured with the laser infrared light (paragraphs 0023 - 0024, Fig. 2). As a result, the device of Patent Literature 1 tries to display and visualize a gas concentration image of a gas leakage portion on a display unit such as a CRT and further tries to display the gas concentration image by superimposing the gas concentration image on a normal thermal infrared image obtained by an infrared camera (paragraphs 0035 - 0036).

### Citation List

### Patent Literature

Patent Literature 1: JP 4286970 B2

### Summary of Invention

### Technical Problem

However, the device of Patent Literature 1 only visualizes the gas concentration image, so that even when the device displays the gas concentration image by superimposing the gas concentration image on the thermal infrared image, it is difficult to intuitively know from which portion of an area of the object to be measured the gas actually leaks. Therefore, it is not possible to grasp at a glance a gas concentration distribution on a visible image (background image) that can be recognized by human vision.

Therefore, a main object of the present invention is to provide a gas concentration measuring device that can accurately superimpose and display the gas concentration image and the background image so that the gas concentration distribution on the background image can be grasped at a glance.

### Solution to Problem

In order to solve above problem, according to an aspect of the present invention, there is provided a gas concentration measuring device including:
an imaging camera that captures an image of a background;
a light source that emits constant light to the background;
a light receiver that receives light of the light source;
a position detector for detecting an irradiation spot of the light of the light source; and
a control device that generates a background image based on an image capturing result of the imaging camera, creates a gas concentration distribution based on a light receiving result of the light receiver and a detection result of the position detector, and superimposes the gas concentration distribution on the background image.

According to another aspect of the present invention, there is provided a gas concentration measuring device having at least a control device that superimposes the gas concentration distribution on a background image, the gas concentration measuring device including:
an imaging camera that captures an image of a background;
a light source that emits constant light to a certain position on the background; and
a light receiver that receives light of the light source,
wherein the light source emits light to a plurality of irradiation spots, and
the control device generates a background image based on an image capturing result of the imaging camera every time the imaging camera captures an image of the background including an irradiation spot of the light of the light source, creates a gas concentration distribution based on a light receiving result of the light receiver, connects together a plurality of the background images, and superimposes the gas concentration distribution on the background images connected together.

### Advantageous Effects of Invention

According to an aspect of the present invention, the gas concentration measuring device includes the imaging camera and the position detector, so that a background image that can be recognized by human vision is generated and a gas concentration distribution is created while a shift amount between an initial measuring position of gas concentration and a subsequent measuring position of gas concentration is calculated. Therefore, it is possible to accurately superimpose and display the gas concentration image and the background image, so that it is possible to grasp the gas concentration distribution on the background image at a glance.

According to another aspect of the present invention, the gas concentration measuring device includes the imaging camera, so that a background image that can be recognized by human vision is generated, and a gas concentration at a certain position on the background is measured every time the imaging camera captures an image of the background, so that a gas concentration distribution is created. Therefore, it is possible to accurately superimpose and display the gas concentration image and the background image, and therefore it is possible to grasp the gas concentration distribution on the background image at a glance.

### Brief Description of Drawings

Fig. 1 is a schematic diagram of a gas concentration measuring device.
Fig. 2 is a flowchart that roughly explains a gas concentration measuring method and illustrates a processing process of a control device over time.
Fig. 3 is a schematic diagram for explaining processing contents of Fig. 2.
Fig. 4 is a schematic diagram illustrating a display example in which a gas concentration distribution is superimposed on a background image.
Fig. 5 is a schematic diagram for explaining processing contents of a modified example.
Fig. 6 is a schematic diagram of a light projecting/receiving system of a gas concentration measuring device according to a second embodiment.
Fig. 7 is a schematic diagram of a gas concentration measuring device according to a third embodiment.
Fig. 8 is a schematic diagram for explaining processing of specifying a light irradiation spot of a light source.
Fig. 9 is a schematic diagram of a gas concentration measuring device according to a fourth embodiment.
Fig. 10 is a schematic diagram for explaining a relationship between generation of background image and measurement of gas concentration.
Fig. 11 is a schematic configuration diagram of a gas concentration measuring device according to a fifth embodiment.
Fig. 12 is a diagram illustrating a relationship between a gas concentration measuring device and a background, including a front view (upper portion) of the background as seen from the gas concentration measuring device and a schematic diagram (lower portion) looking down between the gas concentration measuring device and the background.
Fig. 13A is a schematic diagram illustrating a superimposition display example of background image and gas concentration distribution when distance information is obtained.
Fig. 13B is a schematic diagram illustrating a superimposition display example of background image and gas concentration distribution when cross-sectionally viewed in a cross-section 1 of Fig. 12.
Fig. 13C is a schematic diagram illustrating a superimposition display example of background image and gas concentration distribution when cross-sectionally viewed in a cross-section 2 of Fig. 12.
Fig. 13D is a schematic diagram illustrating a superimposition display example of background image and gas concentration distribution when cross-sectionally viewed in a cross-section 3 of Fig. 12.
Fig. 14A is a graph illustrating an example of a relationship between an operating speed and a measurement distance from the gas concentration measuring device to the background or an object when setting a limit value to a scanning speed of a light projecting/receiving system according to the measurement distance.
Fig. 14B is a schematic diagram for explaining an example of a relationship between an operating speed and a measurement distance from the gas concentration measuring device to the background or an object when setting a limit value to the scanning speed of the light projecting/receiving system according to the measurement distance.

### Description of Embodiments

Hereinafter, preferred embodiments of the present invention will be described with reference to the drawings.

### [First Embodiment]

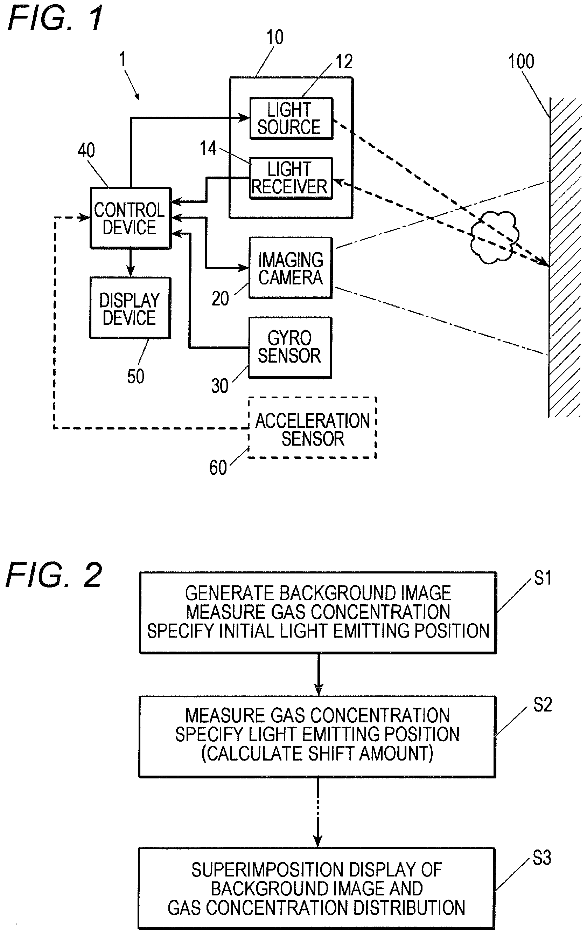

As illustrated in Fig. 1, a gas concentration measuring device 1 includes a light projecting/receiving system 10, an imaging camera 20, a gyro sensor 30, a control device 40, and a display device 50.

The light projecting/receiving system 10 is a mechanism that projects and receives light for measuring a gas concentration and includes a light source 12 and a light receiver 14.

The light source 12 emits constant light to a background 100. As the light source 12, a laser diode (LD) that can emit laser light with variable wavelength is used. LD is an example of the light source 12 and another light source may be used instead of LD.

The light receiver 14 is a so-called light receiving sensor. The light receiver 14 receives light that is emitted from the light source 12 and reflected by the background 100.

The wavelength of the light emitted from the light source 12 is an infrared wavelength, which is specifically preferred to be 0.7 µm or more.

The "constant light" according to the present invention is light including a wavelength that generates absorption by gas, and the "constant light" may be a continuous light, a pulse light, or a modulated light.

The imaging camera 20 is a camera that captures an image of the background 100. The imaging camera 20 captures an image of the background 100 including a gas concentration measuring spot (a light irradiation spot of the light source 12).

The gyro sensor 30 is a measuring instrument that detects an angle and an angular velocity of an object (the light source 12 in the present embodiment). The gyro sensor 30 is used to detect a gas concentration measuring position of the gas concentration measuring device 1, specifically, a light emitting position of the light source 12. Such a gyro sensor 30 detects the light emitting position of detected light of the light source 12 (position, angle, and the like of the light source). The light irradiation spot of the light source 12 (the gas concentration measuring spot described later) is detected based on the light emitting position. That is, the gyro sensor 30 can be viewed as an example of a position detector for detecting the light irradiation spot of the light source 12. In the present invention, another position detector may be used instead of the gyro sensor 30.

The control device 40 is connected with the light source 12, the light receiver 14, the imaging camera 20, and the gyro sensor 30 and controls operations of these components.

For example, the control device 40 can cause the light source 12 to emit light of a wavelength that can be absorbed by gas (light of a specific wavelength that is absorbed by gas to be measured) and calculate the gas concentration based on a light receiving result of the light receiver 14. The control device 40 can cause the imaging camera 20 to capture an image of the background 100 and generate a background image based on a capturing result of the image. The control device 40 can specify the light emitting position of the light source 12 based on a detection result of the gyro sensor 30.

The display device 50 is connected with the control device 40. The control device 40 causes the display device 50 to display a generated background image and further causes the display device 50 to display a gas concentration distribution based on the light receiving result of the light receiver 14 and the detection result of the gyro sensor 30. The generated background image is a visible image.

Next, a gas concentration measuring method performed by the gas concentration measuring device 1 will be described.

In the gas concentration measuring method, it is assumed that a user fixes the gas concentration measuring device to a tripod stand or the like and sequentially measures a gas concentration near the background 100 while causing the light projecting/receiving system 10 to scan in a certain direction (of course, the user may manually operate the gas concentration measuring device 1 without fixing the gas concentration measuring device 1 to a tripod stand or the like and sequentially measure a gas concentration near the background 100 while causing the light projecting/receiving system 10 to scan in a certain direction).

As illustrated in Fig. 2, the gas concentration measuring by the gas concentration measuring device 1 is basically performed through steps S1 to S3 performed by the control device 40.

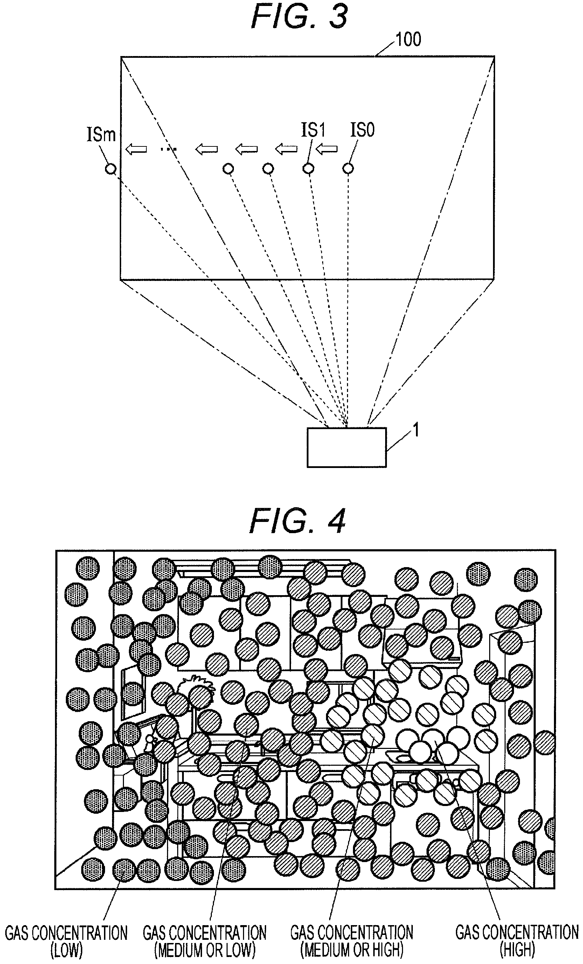

In step S1, as illustrated in Fig. 3, the control device 40 causes the imaging camera 20 to capture an image of the background 100 and generates a background image based on a capturing result of the image.

At the same time, the control device 40 causes the light source 12 to emit a light that can be absorbed by gas, specifies an initial emitting position P0 of the light of the light source 12 and sets an initial irradiation spot ISO on the background image based on the detection result of the gyro sensor 30, and calculates a gas concentration at the initial irradiation spot IS0 based on a light receiving result of the light receiver 14.

In step S2, at a gas concentration measuring position after the scanning, the control device 40 causes the light source 12 to emit a light that can be absorbed by gas, specifies a first emitting position P1 of the light of the light source 12 and specifies a first irradiation spot IS1 on the background image based on the detection result of the gyro sensor 30, and calculates a gas concentration at the first irradiation spot IS1 based on a light receiving result of the light receiver 14.

In particular, in step S2, the control device 40 calculates a shift amount of light emitting position of the light source 12 between the initial emitting position P0 and the first emitting position P1 based on the detection result of the gyro sensor 30 at the initial emitting position P0 and the detection result of the gyro sensor 30 at the first emitting position P1, and specifies the first irradiation spot IS1 based on the shift amount.

Thereafter, every time the user causes the gas concentration measuring device 1 to scan, the control device 40 repeats the same processing as that in step S2. When the scanning of one line in the horizontal direction in Fig. 3 is completed, the user changes the height of the tripod stand and the orientation of the light projecting/receiving system 10 in the vertical direction, and accordingly the control device 40 may perform the same processing as that in step S2.

As a result, the control device 40 specifies an nth irradiation spot ISn (n is an integer greater than or equal to two) while calculating a shift amount of light emitting position of the light source 12 between the initial emitting position P0 and an nth emitting position Pn, and creates a gas concentration distribution where a gas concentration is mapped with respect to the accurately specified irradiation spot ISn of the light of the light source 12.

When the control device 40 calculates a shift amount of light emitting position of the light source 12 between the initial emitting position P0 and an mth emitting position Pm (m is an integer greater than or equal to one), if the control device 40 determines that the shift amount exceeds a certain value and an mth irradiation spot ISm is out of the background 100 (see Fig. 3), the control device 40 causes the display device 50 to display information accordingly. An alarm may be sounded instead of displaying the information.

In step S3, the control device 40 superimposes the gas concentration distribution created in the repetition of step S2 on the background image generated in step S1 and causes the display device 50 to display an image created in this way (see Fig. 4). Fig. 4 illustrates an example in which a gas concentration distribution around a gas cooking stove is superimposed on a background image around a kitchen. The gas concentration distribution is an example of a gas concentration image, and another gas concentration image may be created and superimposed.

According to the present embodiment described above, in the gas concentration measuring device 1, the imaging camera 20 and the gyro sensor 30 are mounted, a background image that can be recognized by human vision is generated, and a gas concentration distribution is created while a shift amount between an initial measuring position of gas concentration and a subsequent measuring position of gas concentration is calculated based on a detection result of the gyro sensor 30. Therefore, it is possible to accurately superimpose and display the gas concentration image and the background image, so that it is possible to grasp the gas concentration distribution on the background image at a glance.

### [Modified Example]

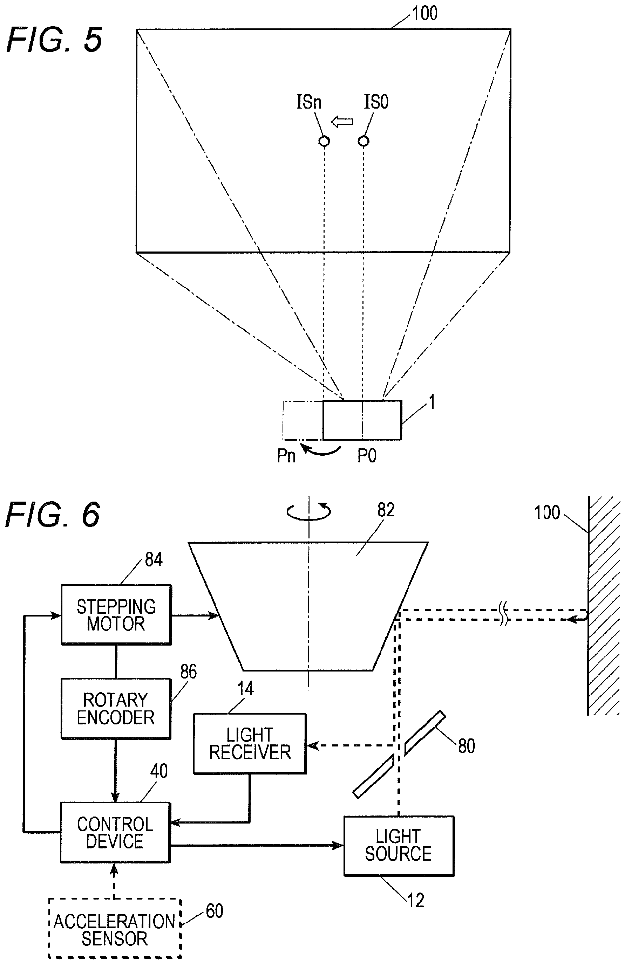

As illustrated in Fig. 5, a user may sequentially measure the gas concentration near the background 100 while moving the gas concentration measuring device 1 itself.

In this case, as illustrated in Fig. 1, an acceleration sensor 60 is mounted in the gas concentration measuring device 1. The acceleration sensor 60 is a sensor that detects acceleration of an object. In the same manner as the gyro sensor 30, the acceleration sensor 60 is also an example of a position detector for detecting the light irradiation spot of the light source 12.

In this configuration, the control device 40 may calculate a shift amount of light emitting position of the light source 12 between the initial emitting position P0 and the nth emitting position Pn based on a detection result of the acceleration sensor 60 at the initial emitting position P0 and a detection result of the acceleration sensor 60 at the nth emitting position Pn and specify the nth irradiation spot ISn based on the shift amount.

Of course, by using both the gyro sensor 30 and the acceleration sensor 60, the control device 40 may calculate the shift amount of light emitting position of the light source 12 between the initial emitting position P0 and the nth emitting position Pn based on detection results of the gyro sensor 30 and the acceleration sensor 60 at the initial emitting position P0 and detection results of the gyro sensor 30 and the acceleration sensor 60 at the nth emitting position Pn and specify the nth irradiation spot ISn based on the shift amount.

### [Second Embodiment]

The second embodiment is different from the first embodiment in the following points and is the same as the first embodiment in the other points (including a modified example).

As illustrated in Fig. 6, the light projecting/receiving system 10 includes a reflection mirror 80, a polygon mirror 82, a stepping motor 84, and a rotary encoder 86 in addition to the light source 12 and the light receiver 14.

The reflection mirror 80 is formed with a transmission hole that transmits the light of the light source 12.

The polygon mirror 82 is a so-called rotary polygon mirror. The polygon mirror 82 has a plurality of reflective surfaces. The polygon mirror 82 reflects the light of the light source 12 while rotating and causes the light to scan in a line.

The stepping motor 84 is connected to the polygon mirror 82. The rotary encoder 86 is built in the stepping motor 84. The rotary encoder 86 is an example of a rotation detector that detects rotation of the polygon mirror 82. The stepping motor 84 and the rotary encoder 86 are connected with the control device 40. The control device 40 controls the stepping motor 84 based on a detection result of the rotary encoder 86 and controls the rotation of the polygon mirror 82.

Next, a gas concentration measuring method performed by the gas concentration measuring device 1 will be described.

In the gas concentration measuring method, it is assumed that the control device 40 causes the light of the light source 12 to scan while rotating the polygon mirror 82 (while switching a reflection angle) and sequentially measures a gas concentration near the background 100.

In step S1, the control device 40 causes the light source 12 to emit a light that can be absorbed by gas, specifies the initial emitting position P0 of the light of the light source 12 and sets the initial irradiation spot IS0 on the background image based on the detection result of the rotary encoder 86, and calculates a gas concentration at the initial irradiation spot IS0 based on a light receiving result of the light receiver 14.

In step S1, the light of the light source 12 passes through the transmission hole of the reflection mirror 80, is reflected by the polygon mirror 82 → the background 100 → the polygon mirror 82 → and the reflection mirror 80, respectively, and is received by the light receiver 14.

In step S2, at a gas concentration measuring position after the reflection angle of the polygon mirror 82 is switched, the control device 40 causes the light source 12 to emit a light that can be absorbed by gas, specifies the first emitting position P1 of the light of the light source 12 and specifies the first irradiation spot IS1 on the background image based on the detection result of the rotary encoder 86, and calculates a gas concentration at the first irradiation spot IS1 based on a light receiving result of the light receiver 14.

In particular, in step S2, the control device 40 calculates a shift amount of light emitting position of the light source 12 between the initial emitting position P0 and the first emitting position P1 based on the detection result of the rotary encoder 86 at the initial emitting position P0 and the detection result of the rotary encoder 86 at the first emitting position P1, and specifies the first irradiation spot IS1 based on the shift amount.

Thereafter, every time the control device 40 switches the reflection angle of the polygon mirror 82, the control device 40 repeats the same processing as that in step S2.

As a result, the control device 40 specifies an nth irradiation spot ISn (n is an integer greater than or equal to two) while calculating a shift amount of light emitting position of the light source 12 between the initial emitting position P0 and an nth emitting position Pn, and creates a gas concentration distribution where a gas concentration is mapped with respect to the accurately specified irradiation spot ISn of the light of the light source 12.

Also according to the present embodiment described above, in the gas concentration measuring device 1, the polygon mirror 82, the stepping motor 84, and the rotary encoder 86 are mounted, and a gas concentration distribution is created while a shift amount between an initial measuring position of gas concentration and a subsequent measuring position of gas concentration is calculated based on a detection result of the rotary encoder 86. Therefore, it is possible to accurately superimpose and display the gas concentration image and the background image, so that it is possible to grasp the gas concentration distribution on the background image at a glance.

Also in the present embodiment, by mounting the acceleration sensor 60 in the gas concentration measuring device 1 and using both the rotary encoder 86 and the acceleration sensor 60, the control device 40 may calculate the shift amount of light emitting position of the light source 12 between the initial emitting position P0 and the nth emitting position Pn based on detection results of the rotary encoder 86 and the acceleration sensor 60 at the initial emitting position P0 and detection results of the rotary encoder 86 and the acceleration sensor 60 at the nth emitting position Pn and specify the nth irradiation spot ISn based on the shift amount.

### [Third Embodiment]

The third embodiment is different from the first embodiment in the following points and is the same as the first embodiment in the other points (including a modified example).

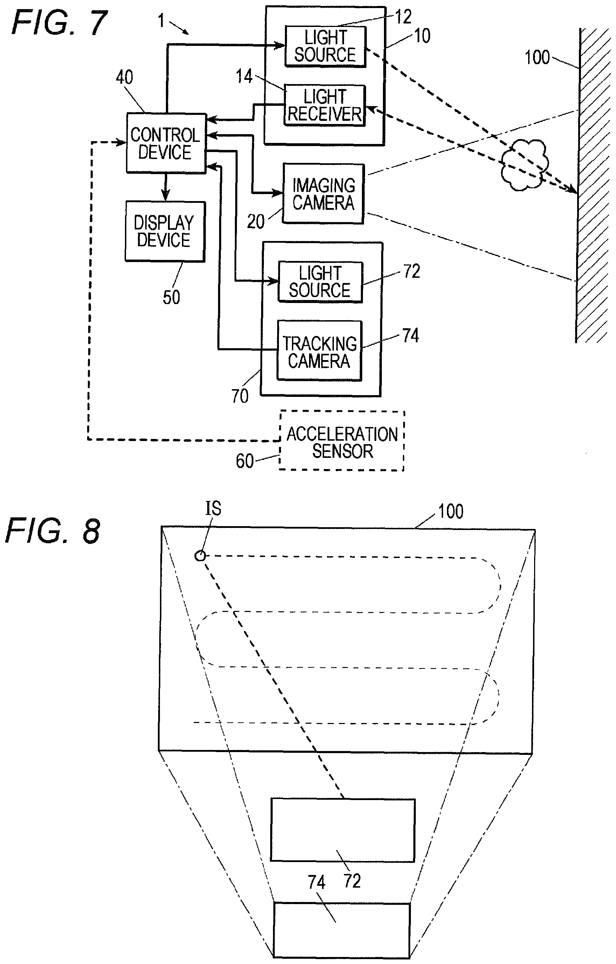

As illustrated in Fig. 7, the gas concentration measuring device 1 includes a position detector 70 instead of the gyro sensor 30.

The position detector 70 includes a light source 72 and a tracking camera 74.

The light source 72 emits visible light to the background 100. The light source 72 is installed coaxially with the light source 12 of the light projecting/receiving system 10. A locus of the light of the light source 12 and a locus of the light of the light source 72 are coincident with each other.

The tracking camera 74 is a camera that tracks the light of the light source 72.

The light source 72 and the tracking camera 74 are connected with the control device 40. As illustrated in Fig. 8, the control device 40 can cause the tracking camera 72 to track light while causing the light source 72 to emit the light, perform image processing on a detection result of the tracking camera 74, and specify an irradiation spot IS of the light of the light source 12.

Next, a gas concentration measuring method performed by the gas concentration measuring device 1 will be described.

In step S1, the control device 40 causes the light source 72 to emit a visible light that is not absorbed by gas, specifies the initial irradiation spot IS0 of the light of the light source 12 based on a detection result of the tracking camera 72, causes the light source 12 to emit a light that can be absorbed by gas, and calculates a gas concentration at the initial irradiation spot IS0 based on a light receiving result of the light receiver 14.

In particular, in step S1, the control device 40 causes the light source 72 to emit a visible light that is not absorbed by gas, causes the tracking camera 72 to track the light, performs image processing on a detection result of the tracking camera 72, and specifies the initial irradiation spot IS0.

In step S2, at a gas concentration measuring position after the scanning, the control device 40 causes the light source 72 to emit a visible light that is not absorbed by gas, specifies the first irradiation spot IS1 of the light of the light source 12 based on a detection result of the tracking camera 72, causes the light source 12 to emit a light that can be absorbed by gas, and calculates a gas concentration at the first irradiation spot IS1 based on a light receiving result of the light receiver 14.

Also in step S2, the control device 40 causes the light source 72 to emit a visible light that is not absorbed by gas, causes the tracking camera 72 to track the light, performs image processing on a detection result of the tracking camera 72, and specifies the first irradiation spot IS1.

Thereafter, every time the user causes the gas concentration measuring device 1 to scan, the control device 40 repeats the same processing as that in step S2.

As a result, the control device 40 creates a gas concentration distribution where a gas concentration is mapped with respect to the irradiation spot IS of the light of the light source 12 which is accurately specified by the position detector 70.

Also according to the present embodiment described above, in the gas concentration measuring device 1, the light source 72 and the tracking camera 74 are mounted as the position detector 70, a gas concentration distribution is created while the irradiation spot IS of the light of the light source 12 is being directly specified based on a detection result of the tracking camera 74. Therefore, it is possible to accurately superimpose and display the gas concentration image and the background image, so that it is possible to grasp the gas concentration distribution on the background image at a glance.

In the present embodiment, it is allowed that the imaging camera 20 is used instead of the tracking camera 74 and the control device 40 causes the imaging camera 20 to track the light of the light source 72 and specifies the irradiation spot IS of the light of the light source 12 based on a detection result of the imaging camera 20.

According to the configuration described above, the tracking camera 74 is not required, so that it is possible to make compact the components of the gas concentration measuring device 1.

Also in the present embodiment, by mounting the acceleration sensor 60 in the gas concentration measuring device 1 and using both the position detector 70 and the acceleration sensor 60, the control device 40 may calculate the shift amount of light emitting position of the light source 12 between the initial emitting position P0 and the nth emitting position Pn based on detection results of the tracking camera 74 and the acceleration sensor 60 at the initial emitting position P0 and detection results of the tracking camera 74 and the acceleration sensor 60 at the nth emitting position Pn and specify the nth irradiation spot ISn based on the shift amount.

### [Fourth Embodiment]

The fourth embodiment is different from the first embodiment in the following points and is the same as the first embodiment in the other points (including a modified example).

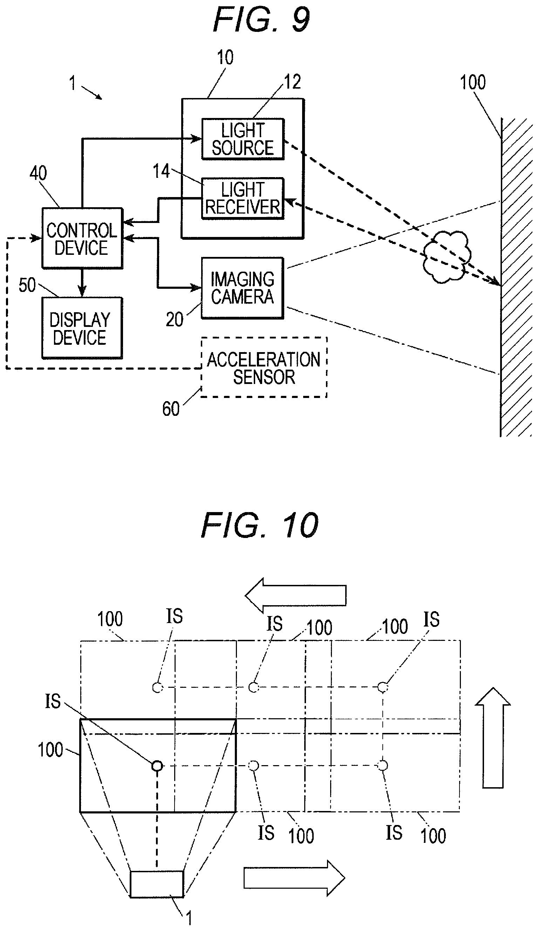

As illustrated in Fig. 9, the gas concentration measuring device 1 does not have the gyro sensor 30.

The arrangement of the light source 12 and the imaging camera 20 of the light projecting/receiving system 10 is fixed and the light of the light source 12 is always emitted to a certain position of the background 100 (that is, a position where a gas concentration, which is an object to be measured, is desired to be measured, and a position a specific distance away from the light source). Here, as illustrated in Fig. 10, the light of the light source 12 is emitted to a central portion of the background 100.

Next, a gas concentration measuring method performed by the gas concentration measuring device 1 will be described.

In the gas concentration measuring method, it is assumed that while a user is moving the gas concentration measuring device 1, at every movement, the user captures an image of the background 100 by the imaging camera 20 and sequentially measures a gas concentration near the background 100. The user moves the gas concentration measuring device 1 in this way, so that the light source according to the present embodiment can irradiate a plurality of irradiation spots with light.

In step S1, the control device 40 causes the imaging camera 20 to capture an image of the background 100 including an irradiation spot IS of light of the light source and generates a background image based on a capturing result of the image.

At the same time, the control device 40 causes the light source 12 to emit a light that can be absorbed by gas and calculates a gas concentration at an irradiation spot IS in a central portion of the background image based on a light receiving result of the light receiver 14.

In step S2, in the gas concentration measuring device after the movement, the control device 40 causes the imaging camera 20 to capture an image of the background 100 and generates a background image based on a capturing result of the image, and further causes the light source 12 to emit a light that can be absorbed by gas and calculates a gas concentration at the irradiation spot IS in the central portion of the background image based on a light receiving result of the light receiver 14.

Thereafter, every time the user moves the gas concentration measuring device 1, the control device 40 repeats the same processing as that in step S2.

As a result, as illustrated in Fig. 10, the control device 40 generates a background image every time the control device 40 captures an image of the background 100, and the control device 40 measures a gas concentration at the irradiation spot IS in the central portion of each background image and creates a gas concentration distribution where a gas concentration is mapped for each background image.

In step S3, the control device 40 connects together a plurality of background images generated by step S1 and repetition of step S2, superimposes the gas concentration distribution created by step S1 and repetition of step S2 on the background images connected together, and causes the display device 50 to display a result of the superimposition.

According to the present embodiment described above, every time the image of the background 100 is captured, a background image is generated and a gas concentration is measured, and then a gas concentration distribution is created where the background images and the gas concentrations are connected together, so that it is possible to accurately superimpose and display a gas concentration image and the background image and therefore it is possible to grasp the gas concentration distribution on the background image at a glance.

Also in the present embodiment, by mounting the acceleration sensor 60 in the gas concentration measuring device 1, the control device 40 may calculate a shift amount of light emitting position of the light source 12 between the initial emitting position P0 and the nth emitting position Pn based on a detection result of the acceleration sensor 60 at the initial emitting position P0 and a detection result of the acceleration sensor 60 at the nth emitting position Pn and specify the nth irradiation spot ISn based on the shift amount.

### [Fifth Embodiment]

The fifth embodiment is different from the first embodiment in the following points and is the same as the first embodiment in the other points (including a modified example).

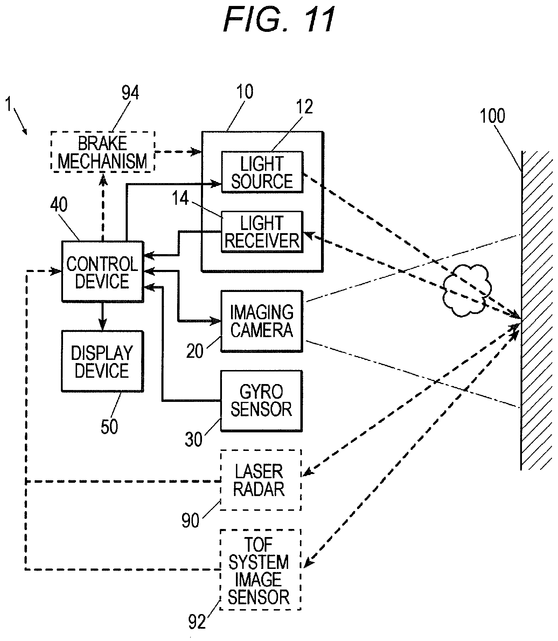

As illustrated in Fig. 11, the gas concentration measuring device 1 includes a laser radar 90 having a light source that emits laser light of a wavelength band that is not absorbed by gas. The laser radar 90 is an example of a range finder that measures a distance to the background 100 or an object in front of the background 100. Another range finder may be used instead of the laser radar 90.

The laser radar 90 is connected with the control device 40. The control device 40 can spatially measure the distance to the background 100 or an object in front of the background 100 based on a detection result of the laser radar 90.

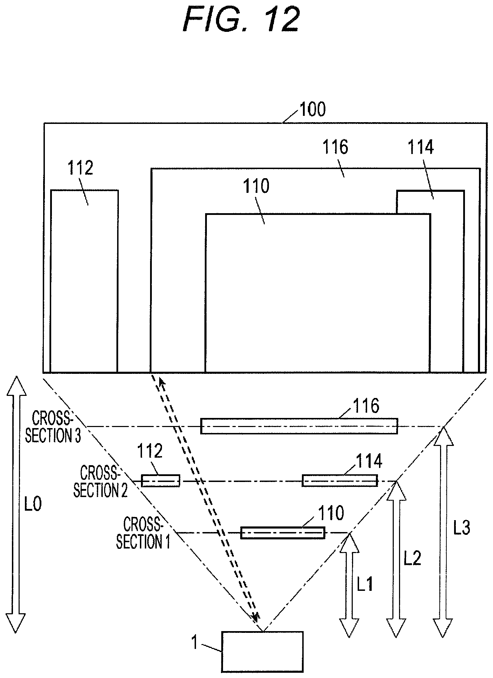

Specifically, as illustrated in Fig. 12, when there are objects 110, 112, 114, and 116 between the gas concentration measuring device 1 and the background 100, the control device 40 can measure a distance L0 to the background 100, a distance L1 to the object 110, a distance L2 to the objects 112 and 114, and a distance L3 to the object 116, respectively, by looking down between the gas concentration measuring device 1 and the background 100 based on the detection result of the laser radar 90.

According to the present embodiment described above, the laser radar 90 is mounted in the gas concentration measuring device 1, and the distances L0 and L1 to L3 to the background 100 and the objects 110, 112, 114, and 116 are measured based on the detection result of the laser radar 90, so that it is possible to additionally display distance information from the gas concentration measuring device 1 to the background 100 and the objects 110, 112, 114, and 116 on a superimposed image of the gas concentration image and the background image.

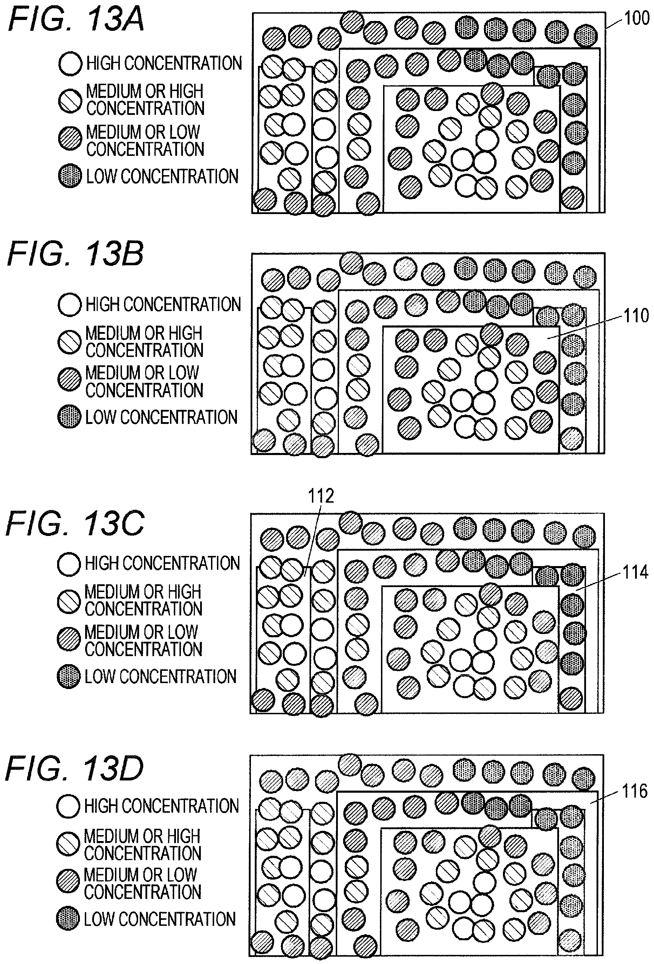

In this case, in addition to the distance L0 from the gas concentration measuring device 1 to the background 100, the distances L1 to L3 from the gas concentration measuring device 1 to the objects 110, 112, 114, and 116 are measured, so that, in addition to the fact that it is possible to superimpose and display the gas concentration distribution on a background image including the background 100 and all the objects 110 112, 114, and 116 as illustrated in Fig. 13A, it is possible to superimpose and display the gas concentration distribution on the background image for each distance L1 to L3 to the objects 110, 112, 114, and 116 as illustrated in Figs. 13B to 13D.

Fig. 13B is a superimposed image viewed in sectional view along a cross-section 1 in Fig. 12 and illustrates an example where a gas concentration near the object 110 is superimposed on the background image including the object 110. Fig. 13C is a superimposed image viewed in sectional view along a cross-section 2 in Fig. 12 and illustrates an example where a gas concentration near the objects 112 and 114 is superimposed on the background image including the objects 112 and 114. Fig. 13D is a superimposed image viewed in sectional view along a cross-section 3 in Fig. 12 and illustrates an example where a gas concentration near the object 116 is superimposed on the background image including the object 116.

Further, when the distances L1 to L3 from the gas concentration measuring device 1 to the objects 110, 112,114, and 116 are measured, for example, as illustrated in Fig. 12, distance information to the object 112 is already obtained even when a gas concentration measuring behind the object 112 is performed, so that when the gas concentration distribution is displayed, as illustrated in Figs. 13A and 13C, the gas concentration distribution near the object 112 is displayed.

As illustrated in Fig. 11, a Time Of Flight (TOF) system image sensor 92 may be used instead of the imaging camera 20 and the laser radar 90. The TOF system image sensor 92 acquires a distance image by measuring in real time a period of time during which a projected light hits a target and returns.

The TOF system image sensor 92 can realize functions of both the imaging camera 20 and the laser radar 90, so that it is possible to make compact the components of the gas concentration measuring device 1.

The second to the fourth embodiments may be partially applied to the fifth embodiment.

For example, when specifying the irradiation spot IS of the light of the light source 12, as in the second embodiment, the light projecting/receiving system 10 including the polygon mirror 82 and the like may be used as the light projecting/receiving system 10 and the irradiation spot IS may be specified based on the detection result of the rotary encoder 86, as in the third embodiment, the position detector 70 including the light source 72 and the tracking camera 74 may be used as a position detector and the irradiation spot IS may be specified based on the detection result of the tracking camera 74, and as in the fourth embodiment, the gyro sensor 30 is not mounted and the central portion of the background image may be specified as the irradiation spot IS every time the image of the background 100 is captured.

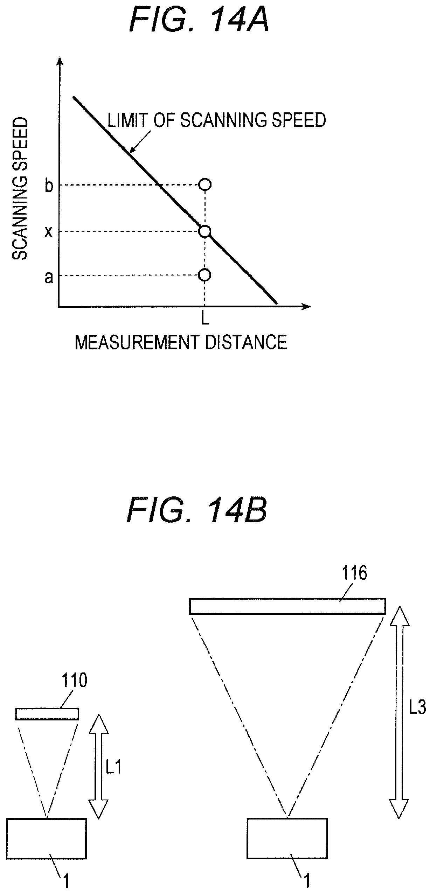

Further, as illustrated in Fig. 14A, a limit value may be set to a scanning speed of the light projecting/receiving system 10 according to the measurement distance from the gas concentration measuring device 1 to the background 100 or an object. Specifically, a high speed scanning is allowed when the measurement distance is small (close) and only a low speed scanning may be allowed when the measurement distance L is large (far).

For example, the above will be described using the example of Fig. 12. As illustrated in Fig. 14B, the distance L1 from the gas concentration measuring device 1 to the object 110 is smaller than the distance L3 from the gas concentration measuring device 1 to the object 116, so that a high speed scanning is allowed near the object 110 and only a low speed scanning is allowed near the object 116.

In this configuration, as illustrated in Fig. 11, a brake mechanism 94 that regulates the scanning of the light projecting/receiving system 10 is mounted in the gas concentration measuring device 1 and the control device 40 may control the brake mechanism 94 to restrict the scanning speed of the light projecting/receiving system 10 to a certain value or less. When the light projecting/receiving system 10 according to the second embodiment is used as the light projecting/receiving system 10, the control device 40 may control the stepping motor 84 to restrict the scanning speed of the light projecting/receiving system 10 to a certain value or less. In this case, the stepping motor 84 is the brake mechanism that regulates the scanning of the light projecting/receiving system 10.

According to the configuration described above, the smaller the measurement distance, the higher the allowed speed of scanning and the more quickly the gas concentration can be measured. On the other hand, when the measurement distance is large, only a low speed scanning is allowed and the number of gas concentration measuring spots can be increased, so that it is possible to create a detailed gas concentration distribution.

Further, it is allowed that a gas concentration (a reference concentration) in the atmosphere that does not contain the gas to be measured is measured in advance for each measurement distance from the gas concentration measuring device 1 to the background 100 or an object, the measured gas concentrations are stored in the control device 40, and the control device 40 calculates a gas concentration based on the reference concentration and the light receiving result of the light receiver 14 when measuring the gas concentration.

According to the configuration described above, it is possible to create an accurate gas concentration distribution according to the measurement distance from the gas concentration measuring device 1 to the background 100 or an object.

### Industrial Applicability

As described above, the present invention is suitable to provide a gas concentration measuring device that can accurately superimpose and display the gas concentration image and the background image so that the gas concentration distribution on the background image can be grasped at a glance.

### Reference Signs List

1 Gas concentration measuring device
10 Light projecting/receiving system
12 Light source
14 Light receiver
20 Imaging camera
30 Gyro sensor
40 Control device
50 Display device
60 Acceleration sensor
70 Position detector
72 Light source
74 Tracking camera
80 Reflection mirror
82 Polygon mirror
84 Stepping motor
86 Rotary encoder
90 Laser radar
92 TOF system image sensor
94 Brake mechanism
100 Background
110, 112, 114, and 116 Object

## Claims

1. A gas concentration measuring device comprising:
an imaging camera that captures an image of a background;
a light source that emits constant light to the background;
a light receiver that receives light of the light source;
a position detector for detecting an irradiation spot of the light of the light source; and
a control device that generates a background image based on an image capturing result of the imaging camera, creates a gas concentration distribution based on a light receiving result of the light receiver and a detection result of the position detector, and superimposes the gas concentration distribution on the background image.

2. The gas concentration measuring device according to claim 1, wherein
the position detector is a gyro sensor.

3. The gas concentration measuring device according to claim 1, further comprising:
a polygon mirror that reflects the light of the light source,
wherein the position detector is a rotation detector that detects rotation of the polygon mirror.

4. The gas concentration measuring device according to claim 1, wherein
the position detector has a second light source that emits visible light to the background and a tracking camera that tracks light of the second light source.

5. A gas concentration measuring device having at least a control device that superimposes the gas concentration distribution on a background image, the gas concentration measuring device comprising:
an imaging camera that captures an image of a background;
a light source that emits constant light to a certain position on the background; and
a light receiver that receives light of the light source,
wherein the light source emits light to a plurality of irradiation spots, and
the control device generates a background image based on an image capturing result of the imaging camera every time the imaging camera captures an image of the background including an irradiation spot of the light of the light source, creates a gas concentration distribution based on a light receiving result of the light receiver, connects together a plurality of the background images, and superimposes the gas concentration distribution on the background images connected together.

6. The gas concentration measuring device according to any one of claims 1 to 4, further comprising:
a range finder that measures a distance to the background or an object; and
a brake mechanism that regulates scanning of the light source,
wherein the control device controls the brake mechanism and restricts a scanning speed of the light source according to a measurement distance based on a detection result of the range finder.

7. The gas concentration measuring device according to claim 6, wherein
the control device stores a reference concentration, which is a gas concentration in atmosphere that does not contain a gas to be measured and which is measured in advance, for each measurement distance to the background or the object, and
the control device calculates a gas concentration based on the reference concentration and the light receiving result of the light receiver.

8. A gas concentration measuring method performed by the gas concentration measuring device according to claim 1 which includes a light source that emits a light that can be absorbed by gas to a background as a light projecting/receiving system and a light receiver that receives the light of the light source, the gas concentration measuring method comprising at least:
a step S1 of capturing an image of the background and generating a background image based on a capturing result of the image, and at the same time, setting an initial irradiation spot on the background image while emitting a light that can be absorbed by gas, receiving the light reflected by the background, and calculating a gas concentration at the initial irradiation spot based on a receiving result of the light;
a step S2 of, after causing the light projecting/receiving system to scan, specifying an irradiation spot after the scanning while emitting the light that can be absorbed by gas, receiving the light reflected by the background, and calculating a gas concentration at the irradiation spot after the scanning based on a receiving result of the light; and
a step S3 of creating a gas concentration distribution by repeating the step S2 and displaying the background image generated in the step S1 and the gas concentration distribution by superimposing the gas concentration distribution on the background image.
